# EUROPEAN PATENT APPLICATION

(11) **EP 4 604 362 A1**
(43) Date of publication of application: **20.08.2025**
(21) Application number: 25156902.6
(22) Date of filing: 10.02.2025
(51) Int. Cl.: H02K 1/276

(54) **ROTOR FOR ELECTRIC MOTOR**

(30) Priority: 13.02.2024 JP 2024019554
(71) Applicant: TOYOTA JIDOSHA KABUSHIKI KAISHA, Aichi-Ken 471-8571 (JP)
(72) Inventor: HISATSUNE, Kazuya, Toyota-shi, 471-8571 (JP); ASAOKA, Hironori, Toyota-shi, 471-8571 (JP); DEGUCHI, Junichi, Toyota-shi, 471-8571 (JP); NAGAI, Shingo, Toyota-shi, 471-8571 (JP); TAKAO, Ren, Toyota-shi, 471-8571 (JP); CHIMATA, Kenta, Toyota-shi, 471-8571 (JP)
(74) Representative: Kuhnen & Wacker Patent- und Rechtsanwaltsbüro PartG mbB

(57) **Abstract**

A rotor for an electric motor includes: a rotor core (11, 111, 211, 311); a plurality of magnet holes provided to the rotor core (11, 111, 211, 311); and a plurality of permanent magnets disposed in the respective magnet holes. The magnet holes extend along the axis of the rotor core (11, 111, 211, 311) and are disposed to have line symmetry with respect to the d-axis as viewed along the axis. The magnet holes include an outermost hole (12, 12L, 12R) located the farthest from the axis and a middle hole (13L, 13R) located next to the outermost hole (12, 12L, 12R) in the radial direction of the rotor core (11, 111, 211, 311). The permanent magnets include an outermost main magnet (14L,14R) and an auxiliary magnet (16L, 16R) disposed in the outermost hole (12, 12L, 12R), and a middle main magnet (15L, 15R) disposed in the middle hole (13L, 13R). Here, the auxiliary magnet (16L, 16R) is adjacent to the outermost main magnet (14L,14R) on the side farther from the d-axis and faces the middle main magnet (15L, 15R).

## Description

### BACKGROUND OF THE INVENTION

### 1. Field of the Invention

The technology disclosed in the present specification relates to a rotor for an electric motor. In particular, the technology disclosed in the present specification relates to a rotor for an interior permanent magnet (IPM) motor in which a permanent magnet is disposed inside the rotor core.

### 2. Description of Related Art

In a rotor of an IPM motor, a plurality of permanent magnets is included in one rotor magnetic pole. The rotor has a plurality of magnet holes extending in the axial direction and the permanent magnets are disposed in the magnet holes. To simplify description, the following sometimes describes an "electric motor" simply as a "motor" and describes a "permanent magnet" simply as a "magnet".

In a rotor disclosed in US 2020/0412190A, two magnets arranged in the circumferential direction of the rotor are included in one rotor magnetic pole. In each of rotors disclosed in Japanese Unexamined Patent Application Publication No. 2020-068654 and WO 2018/210577, more magnets are included in one rotor magnetic pole. The magnets are arranged in the radial direction of the rotor as viewed from the axial direction of the rotor. In addition, the magnets are disposed to have line symmetry with respect to the d-axis as viewed along the axial direction of the rotor. It is to be noted that the "d-axis" means the principal direction of magnetic fluxes emitted from one rotor magnetic pole.

### SUMMARY OF THE INVENTION

A magnet hole is larger than a magnet as viewed along the axial direction of a rotor. The magnet of the rotor forms a rectangular shape as viewed along the axis of the rotor. The length of the magnet hole in the longitudinal direction of the magnet hole is greater than the length of a long side of the rectangle of the magnet. There is left a cavity next to a short side of the rectangular magnet. The cavity is sometimes filled with resin, such as epoxy. The cavity and the resin both have no magnetism. No magnetic fluxes pass through the cavity or the resin. The present specification provides technology that disposes a different magnet (auxiliary magnet) in the cavity of the magnet hole and adjusts the paths of magnetic fluxes formed by the rotor magnetic pole such that the output torque of the motor increases.

A rotor for an electric motor according to an aspect of the present case includes: a rotor core having a plurality of magnet holes; and a plurality of permanent magnets disposed in the respective magnet holes. The magnet holes extend along the axis of the rotor core and are disposed to have line symmetry with respect to the d-axis as viewed along the axis. The magnet holes include an outermost hole located the farthest from the axis and a middle hole located next to the outermost hole in the radial direction of the rotor core. The permanent magnets include an outermost main magnet and an auxiliary magnet, and a middle main magnet. The outermost main magnet and the auxiliary magnet are disposed in the outermost hole. The middle main magnet is disposed in the middle hole. The auxiliary magnet is adjacent to the outermost main magnet on the side farther from the d-axis and faces the middle main magnet.

The permanent magnets disposed to have line symmetry with respect to the d-axis are included in one rotor magnetic pole. When no auxiliary magnet is adopted, there is left a void at an end of the outermost hole (the end farther from the d-axis). For the sake of description, the void at the end of the outermost hole farther from the d-axis will be referred to as a distal end void. In a conventional rotor, a distal end void is filled with a non-magnetic material (including air). Some of magnetic fluxes emitted from a middle main magnet therefore go away from the d-axis to take a detour around the distal end void. Meanwhile, in the rotor disclosed in the present specification, an auxiliary magnet is disposed in a distal end void. Some of magnetic fluxes emitted from a middle main magnet are drawn to the auxiliary magnet and come closer to the d-axis. The rotor disclosed in the present specification allows magnetic fluxes of the magnetic pole to concentrate near the d-axis. The output torque of the motor thus increases.

Details of the technology disclosed in the present specification and further improvements will be described in "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a front view of a motor including a rotor according to an embodiment;
FIG. 2 is a front view of the rotor according to the embodiment (only a right half);
FIG. 3 is a result of a simulation of a magnetic flux generated in the rotor according to the embodiment;
FIG. 4 is a result of a simulation of a magnetic flux generated in a rotor according to a comparative example;
FIG. 5 is a diagram in which magnetic fluxes near distal end voids of outermost holes are compared;
FIG. 6 is a front view of a rotor according to a first modification example;
FIG. 7 is a front view of the rotor according to the first modification example (a diagram in which an auxiliary line for describing disposition of a magnet is added);
FIG. 8 is a front view of a rotor according to a second modification example; and
FIG. 9 is a front view of a rotor according to a third modification example.

### DETAILED DESCRIPTION OF EMBODIMENTS

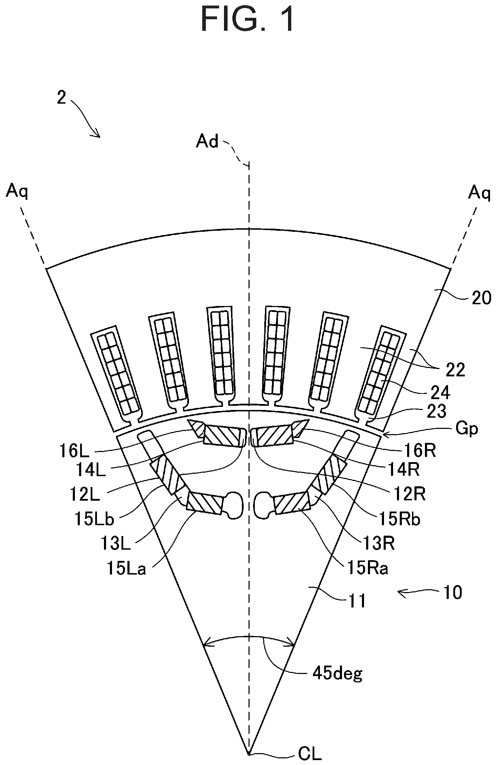

A rotor according to an embodiment will be described with reference to the drawings. FIG. 1 is a front view of a motor 2 including a rotor 10 according to the embodiment. Here, the front view is a view of the rotor 10 taken along an axis CL of the rotor 10. In addition, FIG. 1 illustrates only a 1/8 fan shape of the motor 2 and omits the other portions.

The motor 2 is an interior permanent magnet (IPM) motor and has magnets (permanent magnets) buried in the rotor core. A "permanent magnet" will also be described simply as a "magnet" below.

The rotor 10 has eight rotor magnetic poles. FIG. 1 illustrates only the portion corresponding to one of the rotor magnetic poles. Since the rotor 10 has eight rotor magnetic poles, one of the rotor magnetic poles corresponds to the area of a 45-degree fan shape of the rotor 10. FIG. 1 illustrates the area of one of the rotor magnetic poles. As well known, the borderline between adjacent rotor magnetic poles corresponds to a q-axis Aq and the central line of a rotor magnetic pole corresponds to a d-axis Ad. In other words, the d-axis Ad corresponds to the principal direction of magnetic fluxes emitted from one rotor magnetic pole.

The motor 2 includes the rotor 10 and a stator 20. The stator 20 includes a plurality of teeth 22 extending toward the rotor 10. A stator coil 24 is wound around a slot 23 between the adjacent teeth 22.

The rotor 10 includes a rotor core 11 having a columnar shape and a plurality of magnets 14R, 14L, 15Ra, 15Rb, 15La, 15Lb, 16R, 16L. The magnets 14R, 14L, 15Ra, 15Rb, 15La, 15Lb, 16R, 16L illustrated in FIG. 1 are included in one rotor magnetic pole. The magnets 14R, 14L, 15Ra, 15Rb, 15La, 15Lb, 16R, 16L included in one rotor magnetic pole are disposed to have polarities in the same direction.

The rotor core 11 is provided with a plurality of magnet holes 12R, 12L, 13R, 13L extending along the axis CL. Each of the magnets is disposed in any of the magnet holes.

"R" included in the reference sign of a magnet means that the magnet is disposed on the right side of the d-axis Ad and "L" included in the reference sign of a magnet means that the magnet is disposed on the left side of the d-axis Ad. Similarly, "R" included in the reference sign of a magnet hole means that the magnet hole is disposed on the right side of the d-axis Ad and "L" included in the reference sign of a magnet hole means that the magnet hole is disposed on the left side of the d-axis Ad.

As illustrated in FIG. 1, the magnet holes are disposed to have line symmetry with respect to the d-axis Ad and the magnets are also disposed to have line symmetry with respect to the d-axis Ad. The disposition of the magnet holes and the magnets on the right side of the d-axis Ad will be therefore described below.

The magnet holes 12R, 13R are arranged in the radial direction of the rotor core 11. The magnet hole 12R is located the farthest from the axis CL and the magnet hole 13R is located next to the magnet hole 12R. For the sake of description, the magnet hole 12R located the farthest from the axis CL will be referred to as the outermost hole 12R. The magnet hole 13R located next to the outermost hole 12R in the radial direction of the rotor core 11 will be referred to as the middle hole 13R.

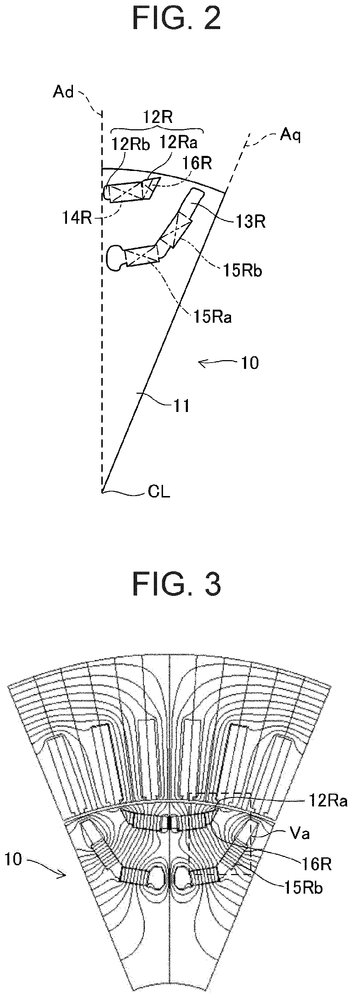

FIG. 2 is a view of only the right side of the rotor core 11 in FIG. 1. FIG. 2 illustrates the magnets 14R, 15Ra, 15Rb, 16R by virtual lines to clarify the shapes of the outermost hole 12R and the middle hole 13R.

The magnets 14R, 16R are disposed in the outermost hole 12R and the magnets 15Ra, 15Rb are disposed in the middle hole 13R. For the sake of description, the magnet 14R disposed in the outermost hole 12R will be referred to as the outermost main magnet 14R and the magnet 16R disposed in the outermost hole 12R will be referred to as the auxiliary magnet 16R. In addition, the magnets 15Ra, 15Rb disposed in the middle hole 13R will be referred to as the middle main magnets 15Ra, 15Rb.

The outermost main magnet 14R has a rectangular shape as viewed along the axis CL and is disposed in the middle of the outermost hole 12R. Voids 12Ra, 12Rb are formed next to the two short sides of the outermost main magnet 14R and the auxiliary magnet 16R is disposed in the void 12Ra.

For the sake of description, of the voids 12Ra, 12Rb on both sides of the outermost main magnet 14R, the void 12Ra farther from the d-axis Ad will be referred to as the distal end void 12Ra and the void 12Rb closer to the d-axis Ad will be referred to as the proximal end void 12Rb. The auxiliary magnet 16R is disposed in the distal end void 12Ra. The proximal end void 12Rb is filled with a non-magnetic material (including air).

The auxiliary magnet 16R is smaller than the outermost main magnet 14R. The auxiliary magnet 16R is adjacent to the outermost main magnet 14R on the side farther from the d-axis Ad and faces the middle main magnet 15Rb. If described in more detail, part of the auxiliary magnet 16R faces a long side of the middle main magnet 15Rb. In addition, the auxiliary magnet 16R is located between the outer periphery of the rotor core 11 and the middle main magnet 15Rb.

Conventionally, both sides of the outermost main magnet 14R have been secured the voids 12Ra, 12Rb and no magnets have been disposed in the voids 12Ra, 12Rb. The reason is as follows. If the outermost main magnet 14R is increased in size to fill the voids 12Ra, 12Rb, the outermost main magnet 14R may be damaged by the centrifugal force of the rotating rotor 10. In addition, if the outermost main magnet 14R is formed to coincide with the outline of the outermost hole 12R, the manufacturing cost of the magnet increases.

In the rotor 10 according to the embodiment, the outermost main magnet 14R is not increased in size in accordance with the size of the magnet hole 12R. A different magnet (auxiliary magnet 16R) is disposed in the distal end void 12Ra. Since the outermost main magnet 14R is not increased in size, the outermost main magnet 14R is not vulnerable to centrifugal force. Meanwhile, disposing the auxiliary magnet 16R in the distal end void 12Ra of the outermost hole 12R makes it possible to increase the torque of the motor 2. It is to be noted that the auxiliary magnet 16R is higher in strength than the outermost main magnet 14R and the middle main magnets 15Ra, 15Rb. Adopting the auxiliary magnet 16R having higher strength makes it possible to increase the resistance of the rotor 10 to centrifugal force and reduce the cost of the rotor 10.

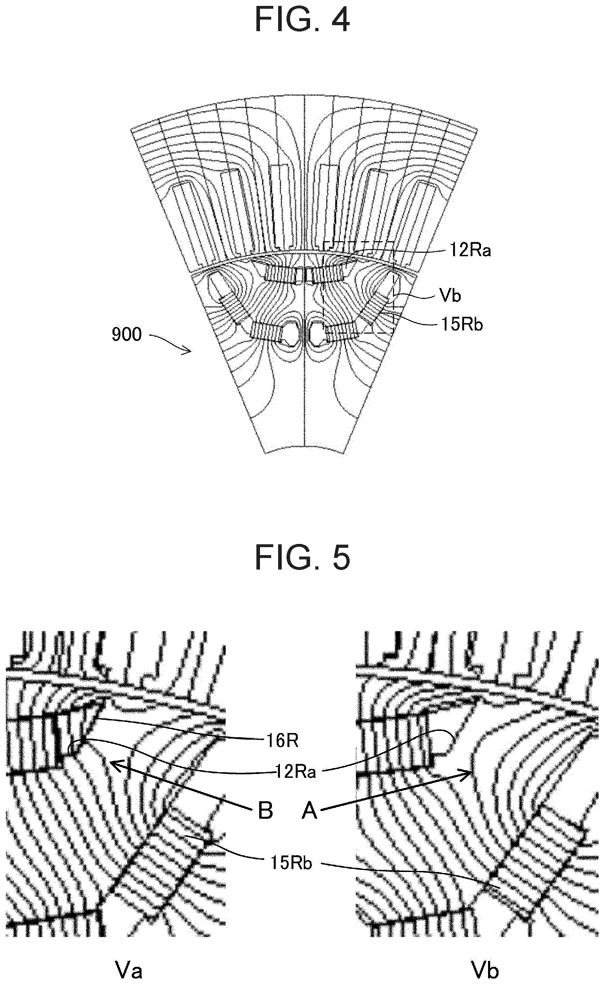

The reason why the auxiliary magnet 16R makes it possible to increase the torque of the motor 2 will be described with reference to FIG. 3 to FIG. 5. FIG. 3 is a result of a simulation of magnetic fluxes emitted from magnets of the rotor 10. For comparison, FIG. 4 illustrates a result of a simulation of magnetic fluxes of a rotor 900 that does not include the auxiliary magnet 16R. FIG. 3 and FIG. 4 are different only in the presence and absence of the auxiliary magnet 16R and the other magnets have the same disposition.

FIG. 5 includes enlarged views of a dashed-line area Va in FIG. 3 and a dashed-line area Vb in FIG. 4. The dashed-line areas Va, Vb are enlarged views near the distal end voids. A void (e.g., distal end void 12Ra) of a rotor is a non-magnetic region and it is not possible for magnetic fluxes to pass through the void. In the comparative example (Vb in FIG. 5), some of magnetic fluxes emitted from the middle main magnet 15Rb go away from the d-axis (see a magnetic flux line A in FIG. 5) instead of passing through the distal end void 12Ra. In contrast, in the rotor 10 (Va in FIG. 5) according to the embodiment, some of magnetic fluxes emitted from the middle main magnet 15Rb are drawn to the auxiliary magnet 16R disposed in the distal end void 12Ra. The magnetic flux line A in Vb in FIG. 5 changes into a magnetic flux line B in Vb. The magnetic flux line A passes through the auxiliary magnet 16R and then proceeds to a surface of the rotor 10. That is, some of magnetic fluxes emitted from the middle main magnet 15Rb are drawn to the auxiliary magnet 16R and come closer to the d-axis. The auxiliary magnet 16R causes the magnetic fluxes of the rotor magnetic pole to concentrate near the d-axis. This increases the output torque of the motor 2.

In addition, the auxiliary magnet 16R is disposed in only the distal end void 12Ra of the voids (the distal end void 12Ra and the proximal end void 12Rb) on both sides of the outermost main magnet 14R. The structure according to the embodiment makes it possible to effectively use magnetic fluxes in comparison with a case where auxiliary magnets are disposed in the respective voids on both sides of the outermost main magnet 14R. In other words, the structure according to the embodiment makes it possible to achieve high torque while reducing the number of magnets in comparison with a case where auxiliary magnets are disposed in the respective voids on both sides of the outermost main magnet 14R. The rotor 10 according to the embodiment is obtained by adding the auxiliary magnet 16R to an original void (distal end void 12Ra). The structure increases the design freedom of a rotor (motor).

The auxiliary magnet 16R is fixed in the outermost hole 12R (distal end void 12Ra) with a foaming agent or an adhesive. The foaming agent or the adhesive makes it possible to reduce stress brought about between the auxiliary magnet 16R and a rotor core 111 by the centrifugal force of the rotating rotor.

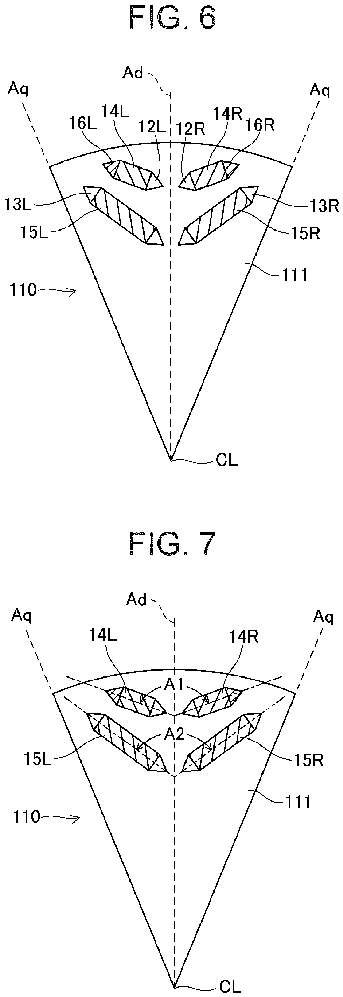

FIG. 6 to FIG. 9 each illustrate a rotor according to a modification example. As with FIG. 1, FIG. 6 to FIG. 9 also each illustrate only one rotor magnetic pole. It is to be noted that FIG. 6 to FIG. 9 each illustrate the simplified shapes of magnet holes. Specifically, voids next to main magnets are each illustrated as a triangle. The voids next to the main magnets are not, however, limited to triangles as long as the voids are smaller than the main magnets. In addition, auxiliary magnets may be sintered magnets or bonded magnets. Each of the auxiliary magnets may be higher in strength than an outermost main magnet and a middle main magnet. A bonded magnet makes it possible to achieve a magnet having higher strength at lower cost than the strength and the cost of a sintered magnet.

### First Modification Example

FIG. 6 is a front view of a rotor 110 according to a first modification example. In the rotor 110, six magnets (the outermost main magnets 14R, 14L, middle main magnets 15R, 15L, and the auxiliary magnets 16R, 16L) are included in one rotor magnetic pole. The magnets 14R, 15R, 16R and the magnets 14L, 15L, 16L are disposed to have line symmetry with respect to the d-axis Ad of the rotor magnetic pole. The outermost main magnets 14R, 14L are disposed to have a V-shape and the middle main magnets 15R, 15L are also disposed to have a V-shape. A plurality of magnet holes and the magnets included in one rotor magnetic pole are disposed to have line symmetry with respect to the d-axis Ad. The disposition of the magnets on the right side of the d-axis Ad will be described below.

The rotor core 111 is provided with the magnet holes. The magnet holes include the outermost hole 12R located the farthest from the axis CL and the middle hole 13R located next to the outermost hole 12R in the radial direction of the rotor core 111. The outermost main magnet 14R and the auxiliary magnet 16R are disposed in the outermost hole 12R. The outermost main magnet 14R forms a rectangular shape as viewed along the axis CL. The auxiliary magnet 16R is adjacent to the outermost main magnet 14R on the side farther from the d-axis Ad. The auxiliary magnet 16R is smaller than the outermost main magnet 14R.

The middle main magnet 15R is disposed in the middle hole 13R. The auxiliary magnet 16R faces the middle main magnet 15R. The auxiliary magnet 16R is disposed between the outer periphery of the rotor core 111 and the middle main magnet 15R. The rotor 110 also has the same advantage as the advantage of the rotor 10 according to the embodiment.

Next, the symmetry of the disposition of the magnet holes and the magnets will be described. The magnet holes are disposed to have line symmetry with respect to the d-axis Ad. The magnets are also disposed to have line symmetry with respect to the d-axis Ad. The outermost holes 12R, 12L are disposed to have line symmetry with respect to the d-axis Ad. The portion between the outermost hole 12R and the outermost hole 12L in the rotor core 111 is referred to as a bridge. In other words, there is provided a bridge between the outermost hole 12R and the outermost hole 12L. Similarly, the middle holes 13R, 13L are disposed to have line symmetry with respect to the d-axis Ad and there is provided a bridge between the middle holes 13R, 13L.

FIG. 7 is a diagram in which auxiliary lines (one-dot chain lines and two-dot chain lines) for describing the disposition of the magnets are added to a front view of the rotor 110. The one-dot chain lines are auxiliary lines overlapping with the central lines of the outermost main magnets 14R, 14L. The two auxiliary lines overlapping with the outermost main magnets 14R, 14L have symmetry with respect to the d-axis Ad and make up a V-shape. That is, the outermost main magnets 14R, 14L are disposed to have a V-shape having line symmetry with respect to the d-axis Ad.

The two-dot chain lines are auxiliary lines overlapping with the central lines of the middle main magnets 15R, 15L. As illustrated by the two two-dot chain lines, the middle main magnets 15R, 15L are disposed to have a V-shape having line symmetry with respect to the d-axis Ad. The outermost main magnets 14R, 14L and the middle main magnets 15R, 15L make up a double V-shape.

The outermost holes 12R, 12L are also formed to have a V-shape having line symmetry with respect to the d-axis Ad. The middle holes 13R, 13L are also formed to have a V-shape having line symmetry with respect to the d-axis Ad.

The interior angle (angle A1 in FIG. 7) of the V-shape made up of the outermost main magnets 14R, 14L is larger than the interior angle (angle A2 in FIG. 7) of the V-shape made up of the middle main magnets 15R, 15L. As the interior angle A2 of the V-shape made up of the middle main magnets 15R, 15L grows larger, magnetic fluxes of the middle main magnet 15R (15L) tend more to proceed to the auxiliary magnet 16R (16L). As a result, the loss of magnetic fluxes decreases still more and the output torque of the motor increases.

### Second Modification Example

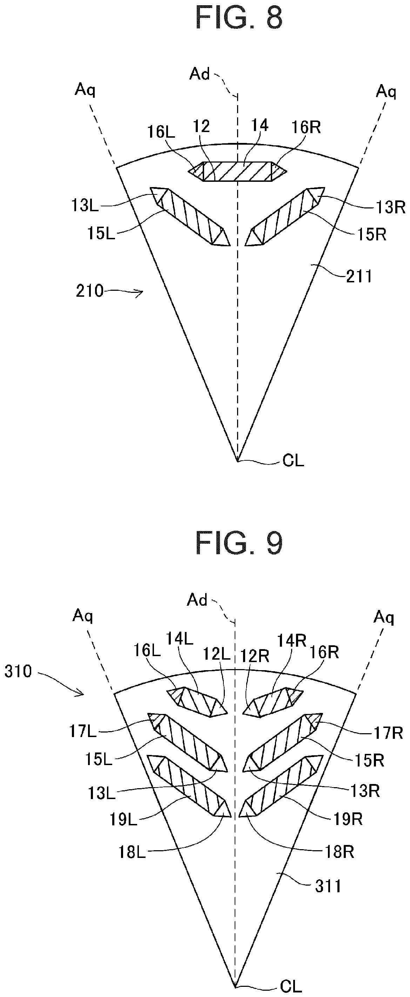

FIG. 8 is a front view of a rotor 210 according to a second modification example. In the rotor 210, five magnets (the outermost main magnet 14, the middle main magnets 15R, 15L, and the auxiliary magnets 16R, 16L) are included in one rotor magnetic pole. The magnets 15R, 16R and the magnets 15L, 16L are disposed to have line symmetry with respect to the d-axis Ad of the rotor magnetic pole. The magnet 14 is also disposed to have line symmetry with respect to the d-axis Ad. The middle main magnets 15R, 15L are also disposed to have a V-shape. The magnet holes and the magnets included in one rotor magnetic pole are disposed to have line symmetry with respect to the d-axis Ad. The disposition of the magnets on the right side of the d-axis Ad will be described below.

The rotor core 211 is provided with the magnet holes. The magnet holes include the outermost hole 12 located the farthest from the axis CL and the middle hole 13R located next to the outermost hole 12 in the radial direction of the rotor core 211. The outermost main magnet 14 and the auxiliary magnet 16R are disposed in the outermost hole 12. The outermost hole 12 is disposed to have line symmetry with respect to the d-axis Ad. Both ends of the outermost hole 12 are therefore located to be equidistant from the d-axis Ad. The auxiliary magnets 16L, 16R are both adjacent to the outermost main magnet 14 on the sides farther from the d-axis Ad.

The middle main magnet 15R is disposed in the middle hole 13R. The auxiliary magnet 16R faces the middle main magnet 15R. The auxiliary magnet 16R is disposed between the outer periphery of the rotor core 211 and the middle main magnet 15R. The rotor 210 also has the same advantage as the advantage of the rotor 10 according to the embodiment.

### Third Modification Example

FIG. 9 is a front view of a rotor 310 according to a third modification example. In the rotor 310, eight magnets (the outermost main magnets 14R, 14L, the middle main magnets 15R, 15L, innermost main magnets 19R, 19L, and the auxiliary magnets 16R, 16L) are included in one rotor magnetic pole. The magnets 14R, 15R, 16R, 19R and the magnets 14L, 15L, 16L, 19L are disposed to have line symmetry with respect to the d-axis Ad of the rotor magnetic pole. The outermost main magnets 14R, 14L are disposed to have a V-shape and the middle main magnets 15R, 15L are also disposed to have a V-shape. The innermost main magnets 19R, 19L are also disposed to have a V-shape. The disposition of the magnets on the right side of the d-axis Ad will be described below.

The rotor core 311 is provided with the magnet holes. The magnet holes include the outermost hole 12R located the farthest from the axis CL, the middle hole 13R located next to the outermost hole 12R in the radial direction of the rotor core 311, and an innermost hole 18R located between the middle hole 13R and the axis CL. The outermost main magnet 14R and the auxiliary magnet 16R are disposed in the outermost hole 12R. The outermost main magnet 14R forms a rectangular shape as viewed along the axis CL. The auxiliary magnet 16R is adjacent to the outermost main magnet 14R on the side farther from the d-axis Ad.

The middle main magnet 15R is disposed in the middle hole 13R. The auxiliary magnet 16R faces the middle main magnet 15R. The auxiliary magnet 16R is disposed between the outer periphery of the rotor core 311 and the middle main magnet 15R. The innermost main magnet 19R is disposed in the innermost hole 18R. The rotor 310 also has the same advantage as the advantage of the rotor 10 according to the embodiment.

Some of the features of the rotor introduced in the embodiment will be summarized. A plurality of illustrated magnets is included in one rotor magnetic pole. An auxiliary magnet is adjacent to an outermost main magnet on the side farther from the d-axis and faces a middle main magnet. The auxiliary magnet is disposed between the outer periphery of the rotor core and the middle main magnet. The auxiliary magnet is located closer to the d-axis Ad than the end of the middle main magnet farther from the d-axis Ad. In other words, the auxiliary magnet is located between the end of the middle main magnet farther from the d-axis Ad and the d-axis Ad.

The auxiliary magnet draws some of magnetic fluxes emitted from the middle main magnet to the d-axis. The feature causes magnetic fluxes of the rotor magnetic pole to concentrate near the d-axis. As a result, the torque of the motor increases.

The outermost main magnet is rectangular as viewed along the axis. A long side extends along the circumferential direction of the rotor. A short side extends along the radial direction of the rotor. The auxiliary magnet is disposed next to the short side farther from the d-axis.

The magnets included in the rotor magnetic pole have north poles (south poles) in the same direction.

A rotor according to any of another embodiment and another modification example may have the feature (FIG. 7) of the rotor 110 regarding the d-axis symmetry of the disposition of the magnet holes and the magnets.

Notes on the technology described in the embodiment will be described. A void of a magnet hole may be filled with a non-magnetic substance (e.g., epoxy resin). There may be provided a slight gap between an outermost main magnet and an auxiliary magnet (see FIG. 1). The outermost main magnet and the auxiliary magnet do not have to have any gap in between (see FIG. 6 to FIG. 9).

The rotor according to the embodiment has eight rotor magnetic poles. The technology disclosed in the present specification is also applicable to a rotor having a smaller number of magnetic poles or a larger number of magnetic poles than eight rotor magnetic poles.

In the rotor 110 according to the embodiment, the interior angle of the V-shape made up of the outermost main magnets 14R, 14L is larger than the interior angle of the V-shape made up of the middle main magnets 15R, 15L. When a plurality of different middle main magnets is disposed between the middle magnets and the axis CL to have a V-shape, the interior angle of the V-shape made up of the different middle main magnets may be smaller or larger than the interior angle of the V-shape made up of the outermost main magnets 14R, 14L. It is sufficient if the interior angle of the V-shape made up of the middle main magnets 15R, 15L next to the outermost main magnets 14R, 14L is smaller than the interior angle of the V-shape made up of the outermost main magnets 14R, 14L.

The specific examples of the present invention have been described so far in detail, but they are merely examples and do not limit the claims. The technology recited in the claims includes a variety of modifications or alternations of the specific examples exemplified above. The technical usefulness is attained by the technical elements described in the present specification or the drawings alone or various combinations of the technical elements. The combinations recited in the claims as filed are not limitative. In addition, the technology exemplified in the present specification or the drawings may achieve a plurality of objects at the same time. Achieving one of the objects itself has technical usefulness.

## Claims

1. A rotor for an electric motor, the rotor comprising:
a rotor core (11, 111, 211, 311) having a plurality of magnet holes; and
a plurality of permanent magnets disposed in the respective magnet holes, wherein
the magnet holes extend along an axis of the rotor core (11, 111, 211, 311) and are disposed to have line symmetry with respect to a d-axis as viewed along the axis, the magnet holes including an outermost hole (12, 12L, 12R) located farthest from the axis and a middle hole (13L, 13R) located next to the outermost hole (12, 12R, 12L) in a radial direction of the rotor core (11, 111, 211, 311),
the permanent magnets include an outermost main magnet (14L, 14R) and an auxiliary magnet (16L, 16R), and a middle main magnet (15L, 15R), the outermost main magnet (14L, 14R) and the auxiliary magnet (16L, 16R) being disposed in the outermost hole (12, 12L, 12R), the middle main magnet (15L, 15R) being disposed in the middle hole (13L, 13R), and
the auxiliary magnet (16L, 16R) is adjacent to the outermost main magnet (14L, 14R) on a side farther from the d-axis and faces the middle main magnet (15L, 15R).

2. The rotor according to claim 1, wherein
the permanent magnets include the outermost main magnets (14L, 14R) and the middle main magnets (15L, 15R),
the outermost main magnets (14L, 14R) are disposed to have a V-shape having line symmetry with respect to the d-axis, and
the middle main magnets (15L, 15R) are disposed to have a V-shape having line symmetry with respect to the d-axis.

3. The rotor according to claim 2, wherein an interior angle of the V-shape made up of the outermost main magnets (14L, 14R) is larger than an interior angle of the V-shape made up of the middle main magnets (15L, 15R).

4. The rotor according to claim 1, wherein the auxiliary magnet (16L,16R) is higher in strength than the outermost main magnet (14L, 14R) and the middle main magnet (15L, 15R).

5. The rotor according to claim 1, wherein the auxiliary magnet (16L,16R) is fixed in the outermost hole with a foaming agent or an adhesive.
